# EUROPÄISCHE PATENTANMELDUNG

(11) **EP 2 843 252 A2**
(43) Veröffentlichungstag der Anmeldung: **04.03.2015**
(21) Anmeldenummer: 14179133.5
(22) Anmeldetag: 30.07.2014
(51) Int. Cl.: F16D 13/58

(54) **Stützvorrichtung für eine Tellerfeder einer Reibkupplung mit einer Rotationsachse**

(30) Priorität: 29.08.2013 DE 102013217222
(71) Anmelder: Schaeffler Technologies AG & Co. KG, 91074 Herzogenaurach (DE)
(72) Erfinder: Schneider, Michael, 76534 Baden-Baden (DE); Ding, Shen, 77830 Bühlertal (DE)

(57) **Zusammenfassung**

Eine Stützvorrichtung (1) für eine Tellerfeder (2) einer Reibkupplung (3) mit einer Rotationsachse (4), aufweisend einen Lagerring (5) zum Lagern der Stützvorrichtung auf einem axial fixierten Widerlager (6) und einen Stützring (7) zum Stützen einer Tellerfeder, wobei der Stützring aus einer Vielzahl von Zungenelementen (8) gebildet ist.

Mit der hier vorgeschlagenen Stützvorrichtung ist es möglich, dass die Belastungsamplituden für das axial fixierte Widerlager der Reibkupplung reduziert werden. Zugleich kann die hier vorgeschlagene Stützvorrichtung in einer konventionellen Reibkupplung eine konventionelle Vorrichtung ersetzen, ohne dass größere Veränderungen vorgenommen werden müssen.

## Beschreibung

Die Erfindung betrifft eine Stützvorrichtung für eine Tellerfeder einer Reibkupplung mit einer Rotationsachse, insbesondere für eine weggesteuerte selbst nachstellende Reibkupplung.

Bei bekannten Reibkupplungen kann es zu einem Aufschwingverhalten an einer Stützfeder kommen. Diese Kräfte müssen durch ein Widerlager aufgenommen werden. Allerdings sind die Kräfte teilweise in den dynamischen Amplituden sehr hoch. Diese hohen Kräfte können zu einem Biegebruch am Widerlager führen.

Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale der unabhängigen Patentansprüche gelöst. Vorteilhafte Weiterbildungen sind Gegenstand der abhängigen Patentansprüche.

Die Erfindung betrifft eine Stützvorrichtung für eine Tellerfeder einer Reibkupplung mit einer Rotationsachse, aufweisend einen Lagerring zum Lagern der Stützvorrichtung auf einem axial fixierten Widerlager und einen Stützring zum Stützen einer Tellerfeder, wobei der Stützring aus einer Vielzahl von Zungenelementen gebildet ist.

Die Stützvorrichtung für die Tellerfeder ist dazu eingerichtet, eine Hebellinie für Tellerfeder zu bilden, über die die Tellerfeder bei ihrer Hebelbewegung verkippt wird. Diese (unterbrochene) Hebellinie wird durch den Stützring gebildet, auf welchem die Tellerfeder aufliegt. Die Lagerkräfte werden über den Lagerring der Stützvorrichtung auf ein axial fixiertes Widerlager übertragen. Das axial fixierte Widerlager kann dabei ein Tellerfederbolzen und/oder ein Haken in einem Kupplungsdeckel der Reibkupplung sein. Wesentlich ist hierbei, dass das Widerlager in Richtung der Rotationsachse der Reibkupplung fixiert ist. Somit kann der Stützring gegenüber dem Widerlager eine axiale Bewegung ausführen, während der Lagerring axial fest am Widerlager angeordnet ist. Hierbei ist der Stützring aus einer Mehrzahl von Zungenelementen gebildet, wobei jedes Zungenelement für sich unter Krafteinleitung verbiegbar ist. Im Falle eines Schwingens beziehungsweise Aufschwingens werden nur die Zungenelemente des Stützrings in Schwingung versetzt und nur eine statische Belastung oder zumindest eine Belastung mit reduzierter Kraftamplitude auf den Lagerring und somit auf das axial fixierte Widerlager übertragen. Somit wird die Beanspruchung, insbesondere die Biegebeanspruchung, auf das axial fixierte Widerlager deutlich reduziert und ein Bruch des Widerlagers unterbunden. Besonders bevorzugt sind eine Vielzahl von Zungenelementen vorgesehen, die gleichmäßig über den Umfang verteilt sind. Ganz besonders bevorzugt ist die Steifigkeit der Zungenelemente gegenüber dem Lagerring weiterhin dadurch reduziert, dass sich zum Lagerring hin verbreiternde (bevorzugt runde) Schlitze vorgesehen sind, die die Steifigkeit der Zungen weiter reduzieren und die Entkoppelung verstärken.

Gemäß einer weiteren vorteilhaften Ausführungsform der Stützvorrichtung sind der Lagerring und der Stützring einstückig gebildet.

Die einstückige Ausbildung des Lagerrings und des Stützrings ermöglicht eine kostengünstige Herstellung und eine günstige Kraftüberleitung vom Stützring auf den Lagerring. Insbesondere werden aufwendige Verbindungsverfahren wie zum Beispiel Schweißen vermieden.

Gemäß einer weiteren vorteilhaften Ausführungsform der Stützvorrichtung weist der Lagerring einen ersten Durchmesser und der Stützring einen zweiten Durchmesser auf, wobei der erste Durchmesser kleiner als der zweite Durchmesser ist.

Für viele Anwendungen ist es vorteilhaft, die Hebelauflage für die Stützfeder im Vergleich zum Lagerring, also der Krafteinleitung in die axial fixierten Bauteile der Reibkupplung, nach außen zu verlegen. Es ist technisch besonders sinnvoll, das Gegenlager für die Tellerfeder, welches für die gegenläufige Hebelbewegung der Tellerfeder eingerichtet ist, im Bereich der Kraftaufnahme des axialen Widerlagers anzuordnen. Somit ist in dieser vorteilhaften Ausführungsform der Stützring auf einem größeren Durchmesser angeordnet als das Gegenlager, wodurch ein Hysterese-Verhalten erzeugt wird, welches das Schwingungsverhalten der Tellerfeder vermindert. Insbesondere bei einer Tellerfederanordnung, die ein Reibpaket der Reibkupplung im Normalzustand verpresst, kann eine Stützvorrichtung mit einem Stützring am äußeren Durchmesser die (schwingungsarme) Rückstellbewegung der Tellerfeder unterstützen.

Gemäß einer weiteren vorteilhaften Ausführungsform der Stützvorrichtung weist der Lagerring eine Versteifung auf, wobei die Stützvorrichtung bevorzugt aus einem Blechmaterial geformt ist und die Versteifung durch eine Bördelung gebildet ist.

Durch die Verwendung einer Versteifung am Lagerring wird die Entkoppelung der Zungenelemente von dem Lagerring unterstützt, weil die Steifigkeit am Lagerring deutlich höher ist als in den einzelnen Zungenelementen. Besonders bevorzugt wird die Stützvorrichtung aus einem Blechmaterial geformt, so dass die Versteifung besonders kostengünstig durch eine Börderlung gebildet werden kann. Die Versteifung kann aber auch durch eine Rippenbildung und/oder Materialverdickung, zum Beispiel durch Anschweißen, erreicht werden. Unabhängig von der Anwesenheit einer Versteifung ist die Stützvorrichtung bevorzugt aus einem Federstahl gefertigt und wird bevorzugt vorgespannt montiert.

Gemäß einem weiteren Aspekt der Erfindung wird eine Reibkupplung mit einer Rotationsachse zum lösbaren Verbinden einer Abtriebswelle mit einem Antriebsstrang vorgeschlagen, welche zumindest die folgenden Komponenten aufweist:
- zumindest ein Reibpaket, über das im angepressten Zustand ein Drehmoment übertragbar ist;
- zumindest eine Tellerfeder, die zum Verpressen oder Lösen des Reibpakets eingerichtet ist;
- zumindest eine Stützvorrichtung gemäß obiger Beschreibung.

Die Reibkupplung ist dazu eingerichtet, ein Drehmoment lösbar von einer Abtriebswelle auf einen Antriebsstrang und umgekehrt zu bewerkstelligen. Dies wird in der Regel über das zumindest eine Reibpaket erreicht, welches eine axial verschiebliche, in der Regel mit der Abtriebswelle rotationsfeste, Anpressplatte aufweist, die gegen zumindest eine korrespondierende Reibscheibe pressbar ist. Infolge der Anpresskraft ergibt sich eine Reibkraft über die Reibfläche, die multipliziert mit dem mittleren Radius der Reibfläche ein übertragbares Drehmoment ergibt. Der Einfachheit halber wird im Folgenden von dem Reibpaket, der Anpressplatte und der Reibscheibe im Singular gesprochen, wodurch die Erfindung jedoch nicht beschränkt wird. Die Tellerfeder rückt bei einer normal verpressten Reibkupplung die Anpressplatte gegen die korrespondierende Reibscheibe und bei einer normal gelösten Reibkupplung löst die Tellerfeder umgekehrt die Anpressplatte von der korrespondierenden Reibscheibe. Die Tellerfeder wird dabei in aller Regel zentral betätigt, das heißt entgegen ihrer normalen Kraftausübung bewegt, und über eine Hebellinie verkippt, so dass das Reibpaket gelöst beziehungsweise umgekehrt verpresst wird. Diese Hebellinie wird einseitig von einem Drahtring, einer Erhebung zum Beispiel in einem Kupplungsdeckel oder ähnlichem gebildet. Auf der anderen Seite wird die Hebellinie durch den Stützring der Stützvorrichtung gebildet. Diese ist bevorzugt gegenläufig zur Entspannungsrichtung der Tellerfeder vorgespannt, so dass die Stützvorrichtung einen (schwächeren) Antagonisten zu der Tellerfeder bildet. Hierdurch kann ein Schwingungsverhalten reduziert werden.

Gemäß einer weiteren vorteilhaften Ausführungsform der Reibkupplung weist die Reibkupplung einen Kupplungsdeckel mit einem fixierten axialen Widerlager auf, wobei das Widerlager durch einen Deckelhaken und/oder einen Tellerfederbolzen gebildet ist.

Bei dieser bevorzugten Ausführungsform der Reibkupplung wird das fixierte axiale Widerlager durch den Kupplungsdeckel gebildet beziehungsweise der Kupplungsdeckel weist eine Aufnahme für ein fixiertes axiales Widerlager auf, so dass die Widerlagerkraft über den Kupplungsdeckel aufgenommen wird. Besonders bevorzugt wird hierbei das Widerlager durch einen Deckelhaken gebildet, welcher bevorzugt einstückig durch Blechverformung des Kupplungsdeckels gebildet wird. Gemäß einer anderen vorteilhaften Ausführungsform wird das axiale Widerlager durch einen Tellerfederbolzen gebildet, welcher einen Anschlag durch einen entsprechenden Absatz am Bolzen für den Lagerring bildet. Der Tellerfederbolzen ist dabei kraft- und/oder formschlüssig mit dem Kupplungsdeckel verbunden. Es sind auch Varianten des Kupplungsdeckels möglich, bei dem sowohl Deckelhaken als auch Tellerfederbolzen verwendet werden, wobei hier vorteilhafterweise weitere Funktionen integral von zumindest einem Deckelhaken und/oder zumindest einem Tellerfederbolzen übernommen werden können.

Gemäß einer weiteren vorteilhaften Ausführungsform der Reibkupplung ist die Tellerfeder auf einem weiteren Hebellager gestützt, wobei die Auflagedurchmesser der Tellerfeder auf der Stützvorrichtung und dem weiteren Hebellager unterschiedlich sind.

Bei dieser besonders bevorzugten Ausführungsform der Reibkupplung sind die Auflagedurchmesser der Tellerfeder auf der Stützvorrichtung beziehungsweise dem Stützring und dem zweiten Hebellager unterschiedlich. Hierdurch wird erreicht, dass die Tellerfeder während ihrer Hebelbewegung eine Hysterese durchläuft, welche ein Schwingungsverhalten der Tellerfeder (weiter) reduziert. Ganz besonders bevorzugt wird hierbei das zweite Hebellager durch einen Drahtring gebildet, welcher zwischen der Tellerfeder und dem Kupplungsdeckel angeordnet ist. Das zweite Hebellager kann aber auch durch eine Ausformung des Kupplungsdeckels, eine Ausformung der Tellerfeder selbst oder eine andere Maßnahme gebildet werden.

Gemäß einem weiteren Aspekt der Erfindung wird auch ein Kraftfahrzeug vorgeschlagen, welches eine Antriebseinheit mit einer Abtriebswelle, einen Antriebsstrang und eine Reibkupplung gemäß der obigen Beschreibung zum lösbaren Verbinden der Abtriebswelle mit dem Antriebsstrang aufweist.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Reibkupplung umfasst eine Stützvorrichtung, welche in eine konventionelle Reibkupplung integrierbar ist und bedarf damit keine größeren Abmessungen bei gleichzeitiger Reduzierung des Aufschwingverhaltens der Tellerfeder und Entkoppelung der Aufschwingung von der Tellerfederaufhängung.

Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: eine Darstellung einer Reibkupplung mit Stützvorrichtung,
- Fig. 2:: eine Stützvorrichtung, und
- Fig. 3:: ein Kraftfahrzeug mit Reibkupplung.

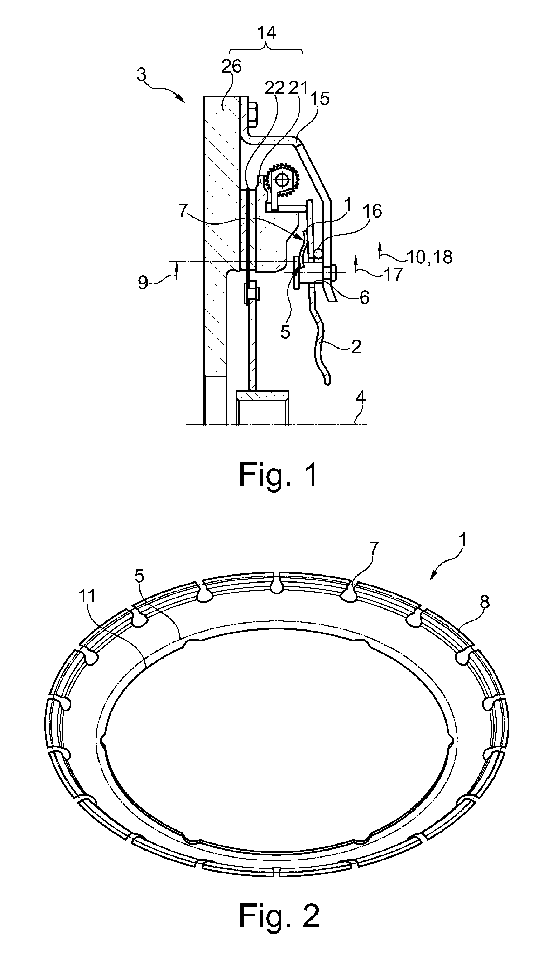

In Fig. 1 ist eine Reibkupplung 3 im Schnitt dargestellt, bei der ein Reibpaket 14, bestehend aus einer Anpressplatte 21, einer Reibscheibe 22 und einer Gegenplatte 26 mittels einer Tellerfeder 2 im Normalzustand verpresst wird. Dabei ist die Tellerfeder 2 über eine Stützvorrichtung 1 und ein weiteres Hebellager 16 gelagert. Die Stützvorrichtung 1 ist über ihren Lagerring 5 über ein axial fixiertes Widerlager 6 mit dem Kupplungsdeckel 15 axial gelagert. Die Tellerfeder 2 liegt auf dem Stützring 7 der Stützvorrichtung 1 auf. Dabei ist der Stützring 7 auf einem zweiten Durchmesser 10 angeordnet, welcher größer ist als der erste Durchmesser 9 der Stützvorrichtung 1. Hierdurch wird erreicht, dass der erste Auflagedurchmesser 17 der weiteren Hebelauflage 16 unterschiedlich von dem zweiten Auflagedurchmesser 18 ist, wobei bei der Bezeichnung der Hebellinie als zweiten Durchmesser 10 des Lagerrings 7 der Auflagedurchmesser 18 mit dem zusammenfällt. Das axial fixierte Widerlager 6 ist in dieser Darstellung ein Tellerfederbolzen, welcher in dem Kupplungsdeckel 15 formschlüssig fixiert ist. Die Komponenten der Reibkupplung 3 sind um die Rotationsachse 4 rotierbar.

In Fig. 2 ist eine Stützvorrichtung 1 gezeigt, welche einstückig aus einem Blech geformt ist, wobei der Einfachheit halber der Stützring 7 und der Lagerring 5 durch einen gestrichelten Kreis angedeutet sind. Die jeweiligen Auflagen des Lagerrings 7 sind durch Zungenelemente 8 gebildet, welche hier gleichmäßig verteilt über den Umfang der Stützvorrichtung 1 angeordnet sind. Der Lagerring 5 ist durch eine Versteifung 11 zusätzlich stabilisiert, so dass die Schwingungsübertragung von den Zungenelementen 8 auf den Lagerring 5 reduziert wird.

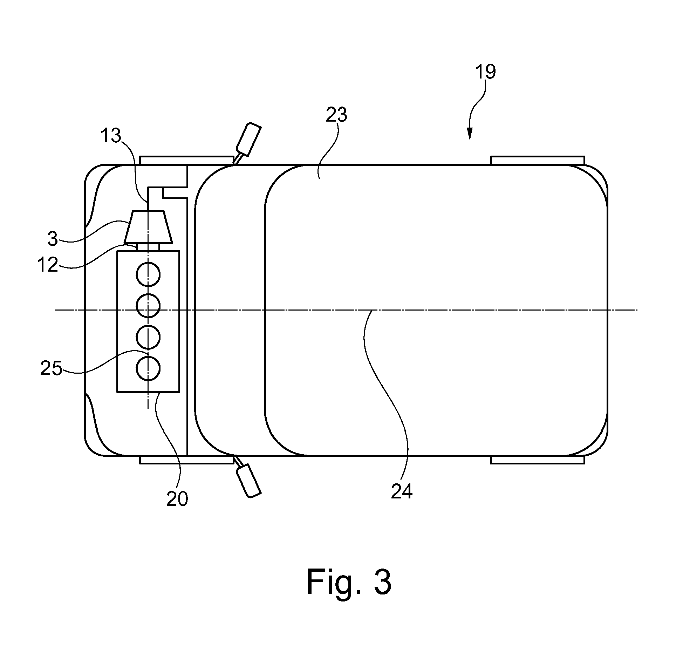

In Fig. 3 ist ein Kraftfahrzeug 19 gezeigt, welches vor seiner Fahrerkabine 23 eine Antriebseinheit 20 aufweist, welche mit ihrer Motorachse 25 quer zur Längsachse 24 des Kraftfahrzeugs 19 angeordnet ist. Hierbei ist die Antriebseinheit 20 als Verbrennungskraftmaschine angedeutet. Die Antriebseinheit 20 ist über ihre Abtriebswelle 12 lösbar mittels einer Reibkupplung 3 mit einem hier rein schematisch dargestellten Antriebsstrang 13 verbunden.

Mit der hier vorgeschlagenen Stützvorrichtung ist es möglich, dass die Belastungsamplituden für das axial fixierte Widerlager der Reibkupplung reduziert werden. Zugleich kann die hier vorgeschlagene Stützvorrichtung in einer konventionellen Reibkupplung eine konventionelle Vorrichtung ersetzen, ohne dass (größere) Veränderungen vorgenommen werden müssen.

### Bezugszeichenliste

- 1: Stützvorrichtung
- 2: Tellerfeder
- 3: Reibkupplung
- 4: Rotationsachse
- 5: Lagerring
- 6: axial fixiertes Widerlager
- 7: Stützring
- 8: Zungenelemente
- 9: erster Durchmesser
- 10: zweiter Durchmesser
- 11: Versteifung
- 12: Abtriebswelle
- 13: Antriebsstrang
- 14: Reibpaket
- 15: Kupplungsdeckel
- 16: weiteres Hebellager
- 17: erster Auflagedurchmesser
- 18: zweiter Auflagedurchmesser
- 19: Kraftfahrzeug
- 20: Antriebseinheit
- 21: Anpressplatte
- 22: Reibscheibe
- 23: Fahrerkabine
- 24: Längsachse
- 25: Motorachse
- 26: Gegenplatte

## Patentansprüche

1. Stützvorrichtung (1) für eine Tellerfeder (2) einer Reibkupplung (3) mit einer Rotationsachse (4), aufweisend einen Lagerring (5) zum Lagern der Stützvorrichtung (1) auf einem axial fixierten Widerlager (6) und einen Stützring (7) zum Stützen einer Tellerfeder (2), wobei der Stützring (7) aus einer Vielzahl von Zungenelementen (8) gebildet ist.

2. Stützvorrichtung (1) nach Anspruch 1, wobei der Lagerring (5) und der Stützring (7) einstückig gebildet sind.

3. Stützvorrichtung (1) nach Anspruch 1 oder 2, wobei der Lagerring (5) einen ersten Durchmesser (9) und der Stützring (7) einen zweiten Durchmesser (10) aufweist, wobei der erste Durchmesser (9) kleiner als der zweite Durchmesser (10) ist.

4. Stützvorrichtung (1) nach einem der vorhergehenden Ansprüche, wobei der Lagerring (5) eine Versteifung (11) aufweist, wobei die Stützvorrichtung (1) bevorzugt aus einem Blechmaterial geformt ist und die Versteifung (11) durch eine Bördelung gebildet ist.

5. Reibkupplung (3) mit einer Rotationsachse (4) zum lösbaren Verbinden einer Abtriebswelle (12) mit einem Antriebsstrang (13), aufweisend zumindest die folgenden Komponenten:
- zumindest ein Reibpaket (14), über das im angepressten Zustand ein Drehmoment übertragbar ist;
- zumindest eine Tellerfeder (2), die zum Verpressen oder Lösen des Reibpakets (14) eingerichtet ist;
- zumindest eine Stützvorrichtung (1) nach einem der vorhergehenden Ansprüche.

6. Reibkupplung (3) nach Anspruch 5, wobei die Reibkupplung (3) einen Kupplungsdeckel (15) mit einem fixierten axialen Widerlager (6) aufweist, wobei das Widerlager (6) durch einen Deckelhaken und/oder einen Tellerfederbolzen gebildet ist.

7. Reibkupplung (3) nach Anspruch 5 oder 6, wobei die Tellerfeder (2) auf einem weiteren Hebellager (16) gestützt ist, wobei die Auflagedurchmesser (17,18) der Tellerfeder (2) auf der Stützvorrichtung (1) und dem weiteren Hebellager (16) unterschiedlich sind.

8. Kraftfahrzeug (19) aufweisend eine Antriebseinheit (20) mit einer Abtriebswelle (12), einen Antriebsstrang (13) und eine Reibkupplung (3) nach einem der Ansprüche 5 bis 7.
